# EUROPÄISCHE PATENTSCHRIFT

(11) **EP 1 590 797 B1**
(45) Veröffentlichungstag und Bekanntmachung des Hinweises auf die Patenterteilung: **10.08.2011**
(21) Anmeldenummer: 03795766.9
(22) Anmeldetag: 19.12.2003
(51) Int. Cl.: G10L 15/26, G10L 13/04

(54) **KOMMUNIKATIONSSYSTEM, KOMMUNIKATIONSENDEINRICHTUNG UND VORRICHTUNG ZUM ERKENNEN FEHLERBEHAFTETER TEXT-NACHRICHTEN**
COMMUNICATION SYSTEM, COMMUNICATION EMITTER, AND APPLIANCE FOR DETECTING ERRONEOUS TEXT MESSAGES
SYSTEME DE COMMUNICATION, DISPOSITIF D'ENVOI DE COMMUNICATIONS ET DISPOSITIF DE DETECTION DE MESSAGES TEXTUELS ENTACHES D'ERREURS

(30) Priorität: 28.01.2003 DE 10304229
(43) Veröffentlichungstag der Anmeldung: 02.11.2005
(73) Patentinhaber: Deutsche Telekom AG, 53113 Bonn (DE)
(72) Erfinder: RUNGE, Fred, 15838 Wünsdorf (DE); MÜLLER, Christel, 15732 Schulzendorf (DE); TRINKEL, Marian, 52372 Kreuzau OT Untermaubach (DE)
(86) Internationale Anmeldenummer: PCT/DE2003/004189
(87) Internationale Veröffentlichungsnummer: WO 2004/068465

(56) Entgegenhaltungen:
- EP-A- 1 170 726
- EP-A2- 0 962 914
- DE-A- 10 065 546
- US-A1- 2002 160 341
- US-B1- 6 219 638

## Beschreibung

Die Erfindung betrifft eine Vorrichtung zum Erkennen fehlerbehafteter Text-Nachrichten, insbesondere fehlerbehafteter SMS-Nachrichten, die aus einer Sprachäußerung erzeugt werden. Die Erfindung betrifft ferner ein Kommunikationssystem und eine Kommunikationsendeinrichtung mit einer Vorrichtung zum Erkennen von fehlerbehafteten Text-Nachrichten.

Diktiergeräte sind hinlänglich bekannt, mit denen eine Spracheingabe in ein entsprechendes Textsignal umgewandelt wird. Die Textsignale können im Diktiergerät gespeichert und wieder abgespielt, oder über ein Kommunikationsnetzwerk zu einer Zieleinrichtung übertragen werden. Ein Nachteil herkömmlicher Diktiergeräte ist darin zu sehen, dass der Benutzer darauf achten muss, ob der aus einer Spracheingabe erzeugte Text korrekt ist oder nicht.

Aus der EP 1 170 726 A1 ist unter anderem ein Sprachkorrekturverfahren offenbart, welches die Korrektur fehlerhaft erkannter Texte in einer Spracherkennungsanwendung korrigiert. Hierbei werden empfangene Sprachsignale in einen entsprechenden Text umgesetzt. Danach wird in dem umgesetzten Text ein erster Sprachkorrekturbefehl erfasst, um eine Korrektur eines in einem Textspeicher abgelegten umgesetzten Textes durchzuführen. Wenn in dem umgesetzten Text kein Sprachkorrekturbefehl erfasst wird, wird dieser umgesetzte Text zusätzlich im Textspeicher abgelegt. Wird hingegen ein Sprachkorrekturbefehl in dem umgesetzten Text erkannt, wird der im Textspeicher abgelegte umgesetzte Text in Abhängigkeit des detektierten Sprachkorrekturbefehls korrigiert.

Aus der US 6,219,638 B1 ist ein Nachrichtensystem zum Empfangen von Sprache über ein Telefon bekannt. Hierzu ist ein Server vorgesehen, der von einem Benutzer eingegebene Sprachsignale empfängt. Weiterhin ist ein Spracherkennungssystem vorgesehen, welches die Sprache in einen Text umsetzt. Ein Sprachsynthesizer wiederum setzt den Text in Sprache um, um die synthetisierte Sprache dem Benutzer zu Korrekturzwecken vorspielen zu können. Weiterhin ist ein Korrekturmechanismus vorgesehen, der einem Benutzer die Korrektur der Sprache ermöglicht, so dass die korrigierte Sprache als Text zur Übertragung über ein Kommunikationssystem bereitgestellt wird.

Die DE 100 65 546 A1 offenbart ein Verfahren zur Übertragung von SMS-Nachrichten über ein Datennetz. Ein rufender Teilnehmer kann die gewünschte Nachricht mittels Sprache in ein Telefongerät eingeben. Die Sprachsignale werden dann über ein Kommunikationsnetz zu einem Übersetzungsmodul übertragen, welches die Sprachnachricht in die Textnachricht umsetzt.

Aus der US 2002/160341 A1 ist ein Verfahren zum Erlernen von Fremdsprachen bekannt. In einer Spracherkennungseinheit werden Sprachinformationen empfangen, die einem Satz entsprechen, der von einem Lernenden gesprochen worden ist. Die empfangene Sprachinformation wird hierbei in Informationen auf der Grundlage von Wörtern, die in dem Satz enthalten sind, getrennt. Eine Prozessoreinheit bewertet dann das Maß der Übereinstimmung zwischen jeder Sprachinformation mit einem Sprachmodell.

Die EP 0 962 914 A2 beschreibt ein Verfahren und eine Vorrichtung zum Ermitteln eines Zuverlässigkeitsmaßes für die Spracherkennung. Dabei werden Sprachsignale einem Spracherkennungssystem zugeführt, das ausgangsseitig entsprechende Textsignale in Form eines digitalen Datensatzes zur Verfügung stellt. Diese digitalen Daten entsprechen einer Folge von erkannten Wörtern, die dem Sprachwortschatz des Spracherkennungssystems entnommen worden sind. Ferner wird eine Folge digitaler Daten am Ende des Spracherkennungssystems ausgegeben, die einer Folge von Sprachsegmenten der erkannten Wörter entsprechen. In einem Assoziationsspeicher werden einem Wort entsprechende digitale Daten der digitalen Wortfolge ausgelesen und ein Vergleich zwischen einer phonetischen Beschreibung eines erkannten Wortes mit dem segmentierten Sprachsignal durchgeführt. Das Ergebnis dieses Ähnlichkeitsvergleiches wird als eine Abstandsfolge auf Wortbasis ausgegeben, die dann von einem Benutzer überprüft und ein fehlerhaftes Wort entsprechend korrigiert werden kann.

Der Erfindung liegt daher die Aufgabe zugrunde, Maßnahmen zu ergreifen, mit denen fehlerbehaftete Text-Nachrichten, die aus einer Sprachäußerung erzeugt worden sind, automatisch erkannt werden können, wobei ein Benutzer gegebenenfalls auf eine fehlerbehaftete Text-Nachricht in einem Sprachdialog aufmerksam gemacht werden kann.

Das technische Problem wird zum Einen mit den Merkmalen des Anspruchs 1 gelöst.

Danach ist eine Vorrichtung zum Erkennen fehlerbehafteter Text-Nachrichten, insbesondere SMS-Nachrichten, die aus Sprachäußerungen erzeugt werden vorgesehen. Die Vorrichtung weist eine Spracherkennungseinrichtung zum Erzeugen einer Text-Nachricht aus wenigstens einer ursprünglichen Sprachäußerung, eine der Spracherkennungseinrichung zugeordnete Sprachsyntheseeinrichtung zum Umsetzen der aus der wenigstens einen ursprünglichen Sprachäußerung erzeugten Text-Nachricht in eine Sprachäußerung und eine mit der Sprachsysntheseeinrichtung verbundenen Vergleichseinrichtung auf, die die wenigstens eine ursprüngliche Sprachäußerung mit der von der Sprachsyntheseeinrichtung erhaltenen Sprachäußerung vergleicht. Um den Benutzer über eine fehlerbehaftete Text-Nachricht informieren zu können, ist eine Einrichtung zur Sprachdialogführung mit dem Benutzer vorgesehen, wobei die Einrichtung zur Sprachdialogführung die Sprachsyntheseeinrichtung oder eine separate Sprachsyntheseeinrichtung enthalten kann. Damit der Benutzer nur bei fehlerbehafteten Text-Nachrichten informiert wird, veranlasst die Einrichtung zur Sprachdialogführung die sprachliche Ausgabe einer Text-Nachricht an den Benutzer in Abhängigkeit vom Ergebnis der Auswerteeinrichtung, das sind Parameter, die die Fehlerhäufigkeit oder Übereinstimmungsrate der Text-Nachricht repräsentiert. Erfindungsgemäß wird die Fehlerhäufigkeit auf einen vorbestimmten Wertebereich gesetzt, wobei die Einrichtung zur Sprachdialogführung die sprachliche Ausgabe einer Text-Nachricht an den Benutzer dann veranlasst, wenn die Fehlerhäufigkeit in einer erzeugten Textnachricht, überschreitet.

Vorteilhafterweise weist die Vorrichtung eine erste Einrichtung zum Extrahieren von Merkmalen aus der empfangenen Sprachäußerung, eine zweite, der Sprachsyntheseeinrichtung zugeordneten Einrichtung zum Extrahieren von Merkmalen aus der umgesetzten Sprachäußerung auf, wobei die Vergleichseinrichtung mit der ersten und zweiten Extraktionseinrichtung verbunden ist und die aus der wenigstens einen ursprünglichen Sprachäußerung extrahierten Merkmale mit den aus der umgesetzten Sprachäußerung extrahierten Merkmalen vergleicht. Die erste Extraktionseinrichtung kann Bestandteil der Spracherkennungseinrichtung sein.

Weitere vorteilhafte Weiterbildungen sind Gegenstand der Unteransprüche.

Um Parameter, die die Fehlerrate bzw. -häufigkeit oder Übereinstimmungshäufigkeit in einer in der Spracherkennungseinrichtung erzeugten Text-Nachricht repräsentieren, ermitteln zu können, ist der Vergleichseinrichtung eine Auswerteeinrichtung zugeordnet.

Eine Speichereinrichtung dient dazu, eine ursprüngliche Sprachäußerung, eine umgesetzte Sprachäußerung, aus einer Sprachäußerung extrahierte Merkmale, das Ergebnis der Vergleichseinrichtung und/oder das Ergebnis der Auswerteeinrichtung zu speichern.

Zusätzlich kann die Sprachdialogführungs-Einrichtung den Benutzer auffordern, einen oder mehrere fehlerhafte Abschnitte innerhalb der mitgeteilten Text-Nachricht einzugeben.

Das technische Problem wird ferner mit den Merkmalen des Anspruchs 5 gelöst.

Danach ist eine Kommunikationsendeinrichtung zum Versenden von Text-Nachrichten, insbesondere SMS-Nachrichten, über wenigstens ein Netzwerk vorgesehen, welche eine Vorrichtung zum Erkennen fehlerbehafteter Text-Nachrichten gemäß Anspruch 1 oder 2 aufweist, vorgesehen. Die Vorrichtung enthält ferner eine Eingabeeinrichtung zur Eingabe von Sprachäußerungen, eine Einrichtung zum Erkennen und Auswerten von Rufnummern, und eine Einrichtung zum Versenden einer Text-Nachricht über ein Kommunikationsnetz an wenigstens eine Zieleinrichtung. Dabei ist eine Sucheinrichtung vorgesehen, die unter Ansprechen auf eine oder mehrere eingegebene bestimmte Sprachäußerungen den dazugehörenden Abschnitt innerhalb der zu versendenden Text-Nachricht sucht.

Vorteilhafte Weiterbildungen sind Gegenstand der Unteransprüche 8 bis 12

Das technische Problem wird zum Anderen durch die Merkmale des Anspruchs 13 gelöst.

Danach ist ein Kommunikationssystem zum Versenden von Text-Nachrichten vorgesehen, welches wenigstens ein Netzwerk, mehrere an das Netzwerk anschaltbare Endeinrichtungen mit einer Eingabeeinrichtung zur Eingabe von Sprachäußerungen, und wenigstens einen dem Netzwerk zugeordneten Nachrichten-Server enthält, der wiederum eine Vorrichtung zum Erkennen fehlerbehafteter Text-Nachrichten gemäß Anspruch 1 oder 2, eine Einrichtung zum Erkennen und Auswerten von Rufnummern und eine Einrichtung zum Versenden einer Text-Nachricht an wenigstens eine Zieleinrichtung aufweist. Erfindungsgemäß weist der Nachrichten-Server einen Speicher zum Ablegen zu versendender Text-Nachrichten und eine Sucheinrichtung auf, die unter Ansprechen auf eine oder mehrere an einer Endeinrichtung eingegebene vorbestimmte Sprachäußerungen den dazugehörenden Abschnitt innerhalb der zu versendenden Text-Nachricht sucht.

Als Vorteil ergibt sich die Möglichkeit, fehlerhafte Abschnitte in der zu versendenden Text-Nachricht zu korrigieren, vorbestimmte Stellen innerhalb der zu versendenden Text-Nachricht zu löschen oder vor und/oder hinter einer gekennzeichneten Stelle innerhalb der zu versendenden Text-Nachricht Ergänzungen einzufügen.

Das Netzwerk kann ein beliebiges Kommunikationsnetz, wie zum Beispiel ein öffentliches Fernsprechnetz, beispielsweise das ISDN, ein Mobilfunknetz, ein privates Netzwerk oder ein anderes Netzwerk sein kann, welches zur Übertragung von Sprachsignalen und/oder deren Merkmale geeignet ist. Bei der Zieleinrichtung kann es sich um eine Nachrichtenzentrale handeln, die anhand der empfangenen Zielrufnummer, Kennung oder Adresse die vom Nachrichten-Server kommende Text-Nachricht an eine Zielendeinrichtung weiterleitet. Alternativ kann der Nachrichten-Server anhand der empfangenen Zielrufnummer die erzeugte Text-Nachricht auch direkt oder über ein Netzwerk an die Zielendeinrichtung übertragen werden.

Vorteilhafte Weiterbildungen sind Gegenstand der folgenden Ansprüche 14 bis 20

Die Spracherkennungseinrichtung kann eine Einrichtung zum Umsetzen von erkannten Sprachäußerungen in eine Zeichenfolge gemäß einem alphanumerischen, vorzugsweise binären Zeichencode aufweisen.

An dieser Stelle sei darauf hingewiesen, dass alle bekannten Spracherkenner und entsprechende Algorithmen zur Spracherkennung zum Einsatz kommen können. Ferner sei angemerkt, dass es sich bei dem alphanumerischen Zeichencode beispielsweise um den ASCII-Code, welcher ein 7-Bit-Code ist, handeln kann.

Um Endeinrichtungen verwenden zu können, die über keine eigene Anzeige verfügen, weist der Nachrichten-Server insbesondere eine Einrichtung zur Führung eines Sprachdialogs mit einer Endeinrichtung auf, wobei die Sprachdialogführungs-Einrichtung eine Steuereinrichtung, die Umsetzungseinrichtung und/oder eine separate Sprachsyntheseeinrichtung enthalten kann. Auch hier sei angemerkt, dass bestehende Sprachsyntheseeinrichtungen und die entsprechenden Sprachsynthesealgorithmen angewandt werden können.

Um beispielsweise eine gesprochene Text-Nachricht am Nachrichten-Server korrigieren zu können, ist die Sprachdialogführungs-Einrichtung in Abhängigkeit vom Ergebnis der Auswerteeinrichtung zur sprachlichen Übertragung einer zu versendenden Text-Nachricht an die Endeinrichtung, an der die der zu versendenden Text-Nachricht entsprechende Sprachäußerung eingegeben worden ist, ausgebildet. Auf diese Weise kann sichergestellt werden, dass die Text-Nachricht nur dann an die Endeinrichtung übertragen wird, wenn sie fehlerhaft ist.

Um zu gewährleisten, dass die vom Benutzer einer Endeinrichtung als Text-Nachricht eingegebene Sprachäußerung auch fehlerfrei vom Nachrichten-Server zur Zielendeinrichtung abgesendet werden kann, ist die Sprachdialogführungs-Einrichtung zur Aufforderung des Benutzers, die Richtigkeit der zu versendenden Text-Nachricht zu bestätigen, oder einen oder mehrere fehlerhafte Abschnitte innerhalb der zu versendenden Text-Nachricht einzugeben, ausgebildet.

An dieser Stelle sei darauf hingewiesen, dass die Sucheinrichtung jeden bekannten Algorithmus anwenden kann, um eine bestimmte Stelle, d. h. ein Wort oder eine Wortgruppe, innerhalb einer zu versendenden Text-Nachricht zu suchen. Es sind beispielsweise Matchingprozesse und Algorithmen zum Auffinden phonetischer Ähnlichkkeiten zwischen Wörtern bekannt, die hierbei zur Anwendung gelangen können.

Um die Qualität der Sucheinrichtung verbessern zu können, kann dieser eine Einrichtung zum Übersetzen einer fremdsprachlichen Sprachäußerung in die Sprache der zu versendenden Text-Nachricht zugeordnet sein.

Ist die Sucheinrichtung in Verbindung mit der Spracherkennungseinrichtung beispielsweise nicht in der Lage, ein zu korrigierendes Wort innerhalb der zu versendenden Text-Nachricht zu finden, kann der Benutzer an seiner Endeinrichtung das fehlerhafte Wort oder eine fehlerhafte Wortgruppe in einer anderen Sprache als der Sprache, in der die zu versendende Text-Nachricht in die Endeinrichtung diktiert worden ist, eingeben. Nach der Spracherkennung wird das in einer Fremdsprache diktierte Wort oder die Wortgruppe von der Übersetzungseinrichtung wieder in die Sprache der zu versendenden Text-Nachricht übersetzt.

Zweckmäßigerweise weist die Sucheinrichtung eine Vergleichseinrichtung zum Vergleichen eines von der Spracherkennungseinrichtung gelieferten Ausgangssignals mit der zu versendenden Text-Nachricht sowie eine Auswahleinrichtung zum Auswählen eines Abschnitts innerhalb der zu versendenden Text-Nachricht auf, wobei der ausgewählte Abschnitt mit einer vorbestimmten Wahrscheinlichkeit dem Ausgangssignal der Spracherkennungseinrichtung entspricht.

Alternativ kann die Sucheinrichtung eine Vergleichseinrichtung zum Vergleichen eines von der Spracherkennungseinrichtung gelieferten Ausgangssignals mit der Folge von Merkmalen, die eine zu versendende

Text-Nachricht darstellen, aufweisen. Ferner enthält die Sucheinrichtung eine Auswahleinrichtung zum Auswählen von Merkmalen aus der Folge von Merkmalen, wobei die ausgewählten Merkmale mit einer vorbestimmten Wahrscheinlichkeit dem Ausgangssignal der Spracherkennungseinrichtung entsprechen. Zusätzlich ist eine Anpassungseinrichtung zum Umsetzen der ausgewählten Merkmale in den dazugehörenden Abschnitt innerhalb der zu versendenden Text-Nachricht oder zum Erzeugung einer Markierung aus den gewählten Merkmalen, die auf den dazugehörenden Abschnitt innerhalb der zu versendenden Text-Nachricht zeigt, vorgesehen. Dieser Prozess ist auch als Matchingprozess bekannt.

Das Grundprinzip der Sucheinrichtung ist darin zu sehen, dass ein vorbestimmter Abschnitt einer Sprachäußerung, die der zu versendenden Text-Nachricht entspricht, erneut an der Endeinrichtung eingegeben und im Nachrichten-Server als Suchmuster - das Suchmuster entspricht hierbei dem von der Erzeugungseinrichtung gelieferten Ausgangssignal -, in welcher Form auch immer, über den aufgezeichneten

Sprachstrom, die Zeichenfolge oder eine beliebige

Zwischenrepräsentation, die jeweils der zu versendenden Textnachricht entsprechen, gelegt wird, um den bestimmten Abschnitt in der zu versendenden Text-Nachricht zu suchen.

Ferner weist der Nachrichten-Server eine Einrichtung auf, die den von der Sucheinrichtung aufgefundenen Abschnitt innerhalb einer zu versendenden Text-Nachricht löschen, ersetzen oder die vor und/oder hinter dem gefundenen Abschnitt einen neuen Textabschnitt einfügen kann.

Um die Qualität der Spracherkennungseinrichtung und damit auch der Sucheinrichtung weiter verbessern zu können, ist es sinnvoll, im Nachrichten-Server benutzerspezifische Merkmale zu hinterlegen, die in vorteilhafter Weise unter der Kennung der Endeinrichtung des jeweiligen Benutzes abgelegt sind. Bei der Kennung kann es sich zum Beispiel um eine Anschlusskennung (CLI, calling line identification), eine IP-Adresse oder um ein HLR (Home Location Register) für ein Mobilfunkgerät handeln. Demzufolge ist in dem Nachrichten-Server eine Einrichtung zum Erkennen und Auswerten von solchen Kennungen vorgesehen. Die Spracherkennungseinrichtung kann unter Ansprechen auf eine mit einer Sprachäußerung übersandten Kennung auf die entsprechenden benutzerspezifischen Merkmale zugreifen. Die Kennungen sind üblicherweise in den Vermittlungsstellen oder Basisstaionen gespeichert, denen die dazugehörenden Endeinrichtungen zugeordnet sind.

Die Erfindung wird nachfolgend anhand einiger Ausführungsbeispiele in Verbindung mit den Zeichnungen näher erläutert. In den Zeichnungen werden für gleiche Komponenten gleiche Bezugszeichen verwendet.

Es zeigen:
Fig. 1 eine schematische Darstellung einer Vorrichtung zum automatischen Erkennen fehlerbehafteter Text-Nachrichten,
Fig.2 eine schematische Darstellung einer alternativen Vorrichtung zum automatischen Erkennen fehlerbehafteter Text-Nachrichten,
Fig. 3 in schematischer Darstellung ein Kommunikationssystem gemäß der Erfindung,
Fig. 4 abschnittsweise das in Fig. 3 gezeigte Kommunikationssystem mit einem alternativen Nachrichten-Server,
Fig. 5 eine abschnittsweise Darstellung des in Fig. 3 gezeigten Kommunikationssystems mit einem alternativen Nachrichten-Server, und
Fig. 6 eine abschnittsweise Darstellung des in Fig. 3 gezeigten Kommunikationssystems mit einem alternativen Nachrichten-Server.

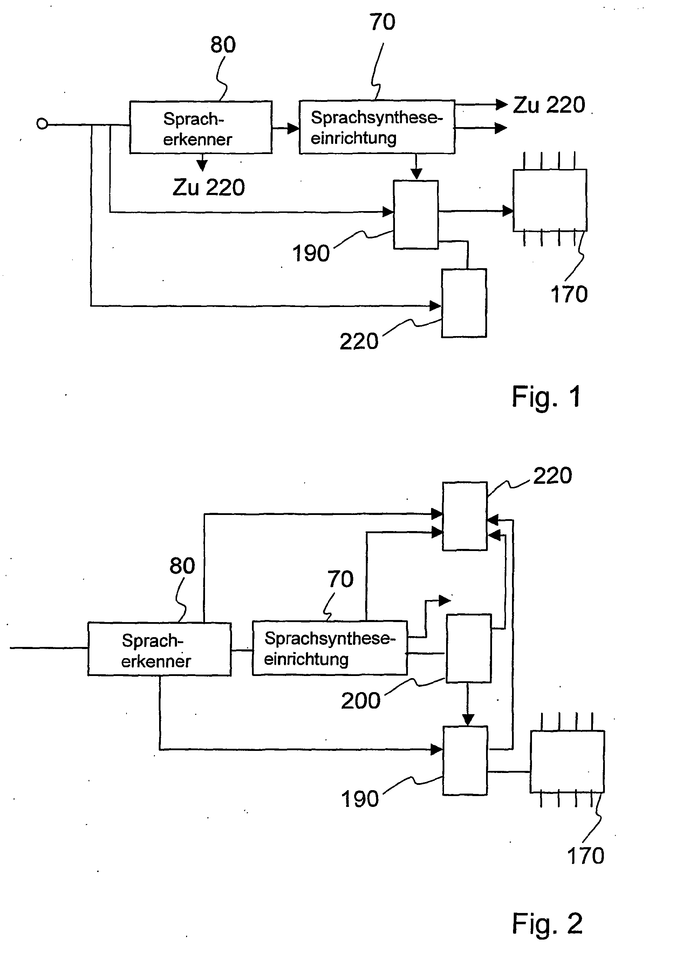

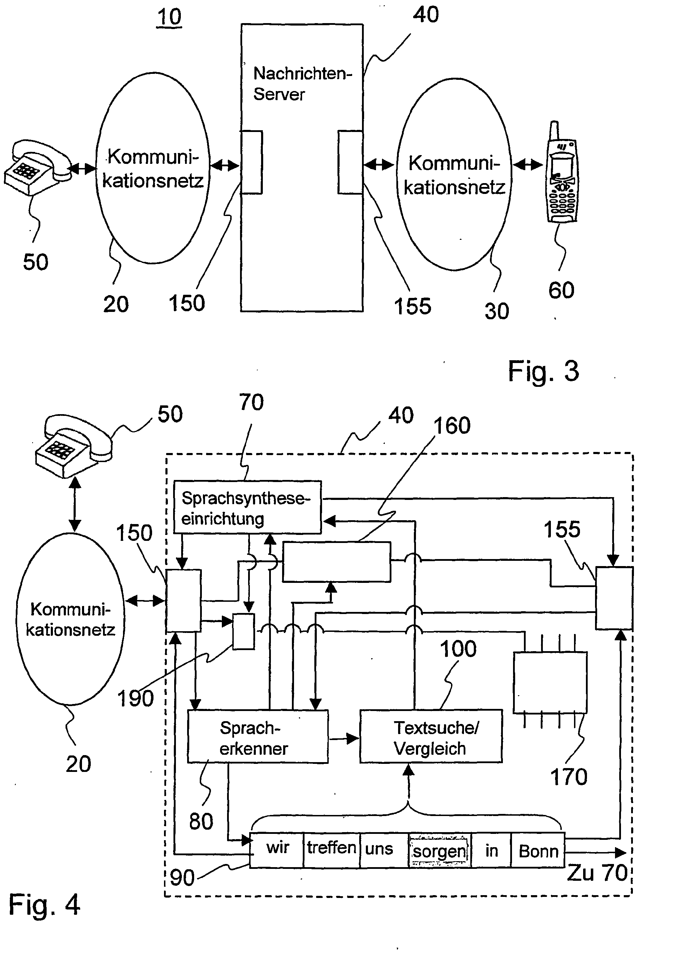

Fig. 1 zeigt eine Vorrichtung zum automatischen Erkennen einer fehlerbehafteten Text-Nachricht, die beispielsweise über ein Kommunikationsnetz zu einer Zieleinrichtung übertragen werden soll. Eine solche Vorrichtung kann beispielsweise in einem Telefon implementiert sein. Eine an einem Mikrofon (z. B. eines Telefons) eingegebene Sprachäußerung "Wir treffen uns morgen in Bonn" wird einem Spracherkenner 80 zugeführt, der aus der Sprachäußerung einen entsprechenden Text erzeugt. Es sei angenommen, dass der Spracherkenner 80 aus der empfangenen Sprachäußerung den fehlerbehafteten Text "Wir treffen uns sorgen in Bonn" erzeugt hat. Der fehlerbehaftete Text wird einer Sprachsyntheseeinrichtung 70 zugeführt, die aus dem fehlerbehafteten Text das dazugehörende Sprachsignal erzeugt. Die am Eingang des Spracherkenners 80 ankommende Sprachäußerung wird dann in einer Vergleichseinrichtung 190 mit der am Ausgang der Sprachsyntheseeinrichtung 70 anliegenden Sprachäußerung verglichen. Eine Auswerteeinrichtung, die in der Vergleichseinrichtung 190 implementiert sein kann, kann ein Ergebnis liefern, dass die Anzahl fehlerhafter Wörter oder Buchstaben anzeigt. Alternativ kann die Auswerteeinrichtung auch einen Parameter liefern, der die Fehlerrate oder Übereinstimmungsrate zum Beispiel in Prozent repräsentiert. In einer Speichereinrichtung 220 können die Ausgangssignale des Spracherkenners 80, der Sprachsyntheseeinrichtung 70, der Auswerteeinrichtung und die am Spracherkenner 80 empfangene Sprachäußerung abgelegt werden. Die Auswerteeinrichtung ist mit einer Steuereinrichtung 170 verbunden, die die Sprachsyntheseeinrichtung 70 veranlasst, die in der Speichereinrichtung 220 abgelegte Sprachäußerung, die von der Sprachsyntheseeinrichtung 70 aus dem fehlerbehafteten Text "Wir treffen uns sorgen in Bonn" erzeugt worden ist, über einen Lautsprecher (z. B. eines Telefons) auszugeben. Ist die Vorrichtung in einem Nachrichten-Server 40, wie unter Anderem in Fig. 4 dargestellt, implementiert, ist die Sprachsyntheseeinrichtung 70 nicht mit einem Lautsprecher, sondern mit Telefonieschnittstellen 150 und 155 verbunden. Anschließend kann die Steuereinrichtung 170 über die Sprachsyntheseeinrichtung 70 eine Aufforderung über den Lautsprecher ausgeben, dass der Benutzer den oder mehrere fehlerhafte Abschnitte innerhalb des fehlerbehafteten Textes über das Mikrofon eingeben soll.

Fig. 2 zeigt eine alternative Vorrichtung zum automatischen Erkennen einer fehlerbehafteten Text-Nachricht, bei der die Sprachsyntheseeinrichtung 70 ausgangsseitig mit einer Extraktionseinrichtung 200 verbunden ist, die aus einer Sprachäußerung Merkmale, insbesondere akustische Merkmale gewinnt. Ein weiterer Unterschied zu der in Fig. 1 gezeigten Vorrichtung besteht darin, dass der Spracherkenner 80 aus der empfangenen Sprachäußerung "Wir treffen uns morgen in Bonn" Merkmale gewinnt, die mit den von der Extraktionseinrichtung 200 bereitgestellten Merkmalen in der Vergleichseinrichtung verglichen werden. Im Übrigen entspricht die Funktionsweise der Vorrichtung der in Fig. 1 gezeigten Vorrichtung.

Fig. 3 zeigt ein beispielhaftes Kommunikationssystem 10, welches ein erstes Kommunikationsnetz 20, ein zweites Kommunikationsnetz 30 und einen den beiden Kommunikationsnetzen zugeordneten Nachrichten-Server 40 aufweist. Der Nachrichten-Server 40 ist über eine Telefonieschnittstelle 150 mit dem Kommunikationsnetz 20 und über eine Telefonieschnittstelle 155 mit dem Kommunikationsnetz 30 verbunden. Das Kommunikationsnetz 20 kann ein öffentliches Fernsprechnetz, beispielsweise das ISDN sein, an dem der einfacheren Darstellung wegen lediglich ein Telefon 50 angeschlossen ist. Das Kommunikationsnetz 30 kann ein Mobilfunknetz, beispielsweise ein GSM-Netz sein, an welchem wiederum lediglich der einfacheren Darstellung wegen lediglich ein Handy 60 angeschlossen ist. An dieser Stelle sei erwähnt, dass es sich bei den Kommunikationsnetzen 20 und 30 um beliebige Netzwerke, beispielsweise auch um private lokale Netzwerke handeln kann, die zur Übertragung von Sprachsignalen oder deren Merkmale genutzt werden können. Ferner kann selbstverständlich auch nur ein Kommunikationsnetz, oder es können auch mehr als zwei Kommunikationsnetze mit dem Nachrichten-Server 40 verbunden werden. Das Kommunikationssystem 10 dient dazu, beispielsweise eine am Telefon 50 eingegebene Sprachäußerung über das Kommunikationsnetz 20 dem Nachrichten-Server 40 zuzuführen, der dann die Sprachäußerung in die dazugehörende Text-Nachricht, beispielsweise eine SMS-Nachricht, umsetzt und diese dann unter Verwendung der am Telefon 50 eingegebenen Zielrufnummer über das Mobilfunknetz 30 zum Handy 60 überträgt. Anstatt eine Text-Nachricht sofort an das Handy 60 zu übertragen, kann es zweckmäßiger sein, dass der Nachrichten-Server 40 zunächst nur eine Mitteilung an das Handy 60 überträgt, in der darauf hingewiesen wird, dass eine Text-Nachricht für das Handy 60 im Nachrichten-Server 40 vorliegt. Der Nachrichten-Server 40 enthält ferner die in Fig. 1 oder 2 gezeigte Vorrichtung zum automatischen Erkennen einer fehlerbehafteten, zu versendenden Text-Nachricht.

An dieser Stelle sei erwähnt, dass es sich bei dem Nachrichten-Server 40 um mindestens einen sprachgesteuerten Server handelt, in dem beispielsweise allgemein bekannte Algorithmen zur Spracherkennung und/oder zur Sprachsynthese implementiert sind. Die oben erwähnten Telefonieschnittstellen 150 und 155 sind in der Lage, Teilnehmer-Rufnummern und Endeinrichtungs-Kennungen zu empfangen und auszuwerten. Als Kennung wird beispielsweise über das Kommunikationsnetz 20 die Anschlusskennung (CLI) des daran angeschalteten Telefons 50 übertragen, die in der dem Telefon 50 zugeordneten Vermittlungsstelle des Kommunikationsnetzes 20 abgelegt ist. Über das Mobilfunknetz 30 wird beispielsweise als Kennung die HLR-Kennung des Handys 60 zum Nachrichten-Server 40 übertragen.

In Fig. 4 ist das in Fig. 3 gezeigte Kommunikationssystem 10 mit einem beispielhaften Nachrichten-Server 40, aber ohne Kommunikationsnetz 30 und ohne Handy 60 dargestellt. Der Nachrichten-Server 40 weist eine Sprachsyntheseeinrichtung 70 auf, die mit den Telefonieschnittstellen 150 und 155 verbunden ist. Eine Spracherkennungseinrichtung 80 ist eingangsseitig mit den beiden Telefonieschnittstellen 150 und 155, einer Sucheinrichtung 100 und einem Speicher 90 beispielsweise über ein Netzwerk verbunden, in dem wenigstens eine zu versendende Text-Nachricht als alphanumerische Zeichenfolge, welche beispielsweise nach dem ASCII-Code umgesetzt worden ist, abgelegt ist. Der Speicher 90 ist mit den beiden Telefonieschnittstellen 150 und 155, einem Eingang der Sprachsyntheseeinrichtung 70 und der Sucheinrichtung 100 beispielsweise über ein Netzwerk verbunden. Die Sucheinrichtung 100 führt Vergleichsfunktion und eine Auswahlfunktion aus, um, wie später noch ausführlich erläutert wird, einen vorbestimmten Abschnitt aus der im Speicher 90 abgelegten, zu versendenden Text-Nachricht zu suchen. Von der Sucheinrichtung 100 wird das Ergebnis zur Sprachsyntheseeinrichtung 70 weitergeleitet. Eine Speichereinrichtung 160 ist mit den beiden Telefonieschnittstellen 150 und 155 verbunden und speichert Zielrufnummern und Endeinrichtungs-Kennungen des Telefons 50 und des Handys 60. Für den Fall, dass die Zielrufnummern in Sprachform an dem Telefon 50 oder dem Handy 60 eingegeben werden können, ist die Speichereinrichtung 160 mit der Spracherkennungseinrichtung 80 verbunden, die die Sprachsignale in eine Zeichenfolge umsetzt, die dann in der Speichereinrichtung 160 abgelegt werden kann. Eine Steuereinrichtung 170 übernimmt die Steuerung und Überwachung des Nachrichten-Servers 40 sowie die Weiterleitung weiterer Informationen.

Darüber hinaus ist die Spracherkennungseinrichtung 80 mit der Sprachsyntheseeinrichtzung 70 verbunden. Eine eine Auswerteeinrichtung enthaltende Vergleichseinrichtung 190 ist eingangsseitig mit der Telefonieschnittstelle 150 und der Sprachsyntheseeinrichtung 70 verbunden. Die Auswerteinrichtung ist mit der Steuereinrihctung 170 verbunden. Dieser Teil des Nachrichten-Servers 40 bildet die in Fig. 1 gezeigte Vorrichtung zum automatischen Erkennen einer fehlerbehafteten Text-Nachricht. Selbstverständlich kann auch die in Fig. 2 dargestellte Vorrichtung in dem Nachrichten-Server 40 implementiert sein. Lediglich der einfacheren Darstellung wegen ist die Speichereinrichtung 220 nicht eingezeichnet.

Nachfolgend wird die Funktionsweise des in Fig. 4 abschnittsweise dargestellten Kommunikationssystems 10 näher erläutert. Es sei angenommen, dass der Benutzer des Telefons 50 eine Text-Nachricht, beispielsweise den Satz "Wir treffen uns morgen in Bonn" an das Handy 60 senden möchte. Dazu fordert der Benutzer des Telefons 50 zunächst über das Kommunikationsnetz 20 den Dienst zum Versenden von Text-Nachrichten an. Daraufhin wird das Telefon 50 über das Kommunikationsnetz 20 mit dem Sprach-Server 40 verbunden. Anschließend diktiert der Benutzer den Satz "wir treffen uns morgen in Bonn" sowie die Rufnummer des Handy's 60. Der gesprochene Text und die Rufnummer des Handy's werden über das Kommunikationsnetz 20 der Spracherkennungseinrichtung 80 des Nachrichten-Servers 40 zugeführt. Die Telefonieschnittstelle 150 oder die Spracherkennungseinrichtung 80 erkennt die empfangene Rufnummer als Rufnummer des Handys 60, an das eine Text-Nachricht übersendet werden soll. Die Spracherkennungseinrichtung 80 setzt die empfangene Rufnummer in eine entsprechende Ziffernfolge um und führt sie der Speichereinrichtung 160 zu. Die gesprochene Text-Nachricht wird ebenfalls der Spracherkennungseinrichtung 80 zugeführt und beispielsweise gemäß dem ASCII-Standardcode in die entsprechende Zeichenfolge umgesetzt und in dem Speicher 90 abgelegt. Wie in Fig. 4 dargestellt, wurde das Wort "morgen" fälschlicherweise als "sorgen" erkannt. Der sprachgesteuerte Nachrichten-Server 40 ist derart implementiert, dass zunächst entsprechend den Ausführungen hinsichtlich der in Fig. 1 dargestellten Vorrichtung in der Vergleichseinrichtung 190 ermittelt wird, ob die an der Telefonieschnittstelle 150 empfangene Sprachäußerung "Wir treffen uns morgen in Bonn" richtig erkannt worden ist. Hierzu werden die Ausgangssignale der Telefonieschnittstelle und der Sprachsyntheseeinrichtung 70 der Vergleichseinrihctung zugeführt. Die Auswerteeinrichtung der Vergleichseinrichtung 190 ermittelt dann zum Beispiel die Fehlerrate. Nur wenn die ermittelte Fehlerrate sich außerhalb eines definierten Bereichs befindet, wird der Benutzer des Telefons 50 zur Prüfung und gegebenenfalls zur Korrektur des diktierten Textes aufgefordert. Hierzu wird die im Speicher 90 abgelegte Zeichenfolge, die dem Text "wir treffen uns sorgen in Bonn" entspricht, der Sprachsyntheseeinrichtung 70 zugeführt, die den Text als Sprachsignal über das Kommunikationsnetz 20 zum Telefon 50 überträgt, so dass der im Speicher 90 abgelegte Text dem Benutzer des Telefons 50 vorgelesen werden kann. In zweckmäßiger Weise fordert der Nachrichten-Server 40 den Benutzer des Telefons 50 auf, die Richtigkeit der gerade vorgelesenen Text- Nachricht zu bestätigen, oder aber ein fehlerhaftes Wort oder Wortgruppen erneut zu diktieren. Der Benutzer des Telefons 50 kann entweder das fehlerhafte Wort "sorgen" oder aber schon das richtige Wort "morgen" am Telefon 50 eingeben. Es sei angenommen, dass der Benutzer das fehlerhafte Wort "sorgen" am Telefon 50 eingibt. Das diktierte Wort "sorgen" wird wiederum über das Kommunikationsnetz 20 der Spracherkennungseinrichtung 80 des Nachrichten-Servers 40 zugeführt. Die Spracherkennungseinrichtung 80 setzt das diktierte Wort "sorgen" in eine Zeichenfolge gemäß dem ASCII-Standard um und vergleicht die erzeugte Zeichenfolge in der Sucheinrichtung 100 mit der im Speicher 90 hinterlegten Zeichenfolge, die der zu versendenden Text-Nachricht entspricht. Die von der Sucheinrichtung 100 ausgeführten Vergleichs- und Auswahlfunktionen können auf herkömmlichen Algorithmen basieren, wie zum Beispiel Algorithmen zum Suchen von phonetischen Ähnlichkeiten zwischen vergleichenden Wörtern. Im vorliegenden Beispiel sei angenommen, dass die Sucheinrichtung 100 das Wort "treffen" aus der im Speicher 90 hinterlegten Text-Nachricht als das Wort gefunden hat, welches mit höchster Wahrscheinlichkeit dem diktierten Wort "sorgen" entspricht. Das gefundene Wort "treffen" wird aus dem Speicher 90 ausgelesen und der Sprachsyntheseeinrichtung 70 zugeführt, die das Wort wiederum dem Benutzer des Telefons 50 "vorliest". Anschließend wird der Benutzer aufgefordert, die Richtigkeit des gefundenen Wortes zu bestätigen, oder das fehlerhafte Wort noch einmal zu diktieren. Dieser geschilderte Suchprozess wird solange wiederholt, bis die Sucheinrichtung 100 das Wort "sorgen" in der im Speicher 90 abgelegten Text-Nachricht gefunden hat. Anschließend wird der Benutzer des Telefons 50 über die Sprachsyntheseeinrichtung 70 aufgefordert, das korrekte Wort einzugeben. Der Benutzer diktiert anschließend das Wort "morgen", welches der Spracherkennungseinrichtung 80 und danach der Sucheinrichtung 100 zugeführt wird. Anschließend wird der Suchprozess wie zuvor hinsichtlich des Begriffs "sorgen" solange durchgeführt, bis der Benutzer die Richtigkeit des erkannten Begriffs "morgen" bestätigt.

Der Nachrichten-Server 40 ist derart ausgebildet, dass er unter Ansprechen auf die Bestätigungsnachricht des Benutzers das fehlerhafte Wort "Sorgen" durch das korrekte Wort "morgen" im Speicher 90 ersetzt. Die korrekte Text-Nachricht kann nunmehr unter Verwendung der zuvor im Speicher 160 abgelegten Zielrufnummer sofort zum Handy 60 übertragen werden. Alternativ kann die im Speicher 90 abgelegte Text-Nachricht zunächst auch zu einer nicht dargestellten Text-Versendezentrale übertragen werden, die dem Handy 60 zunächst lediglich das Vorliegen einer neuen Text-Nachricht signalisiert.

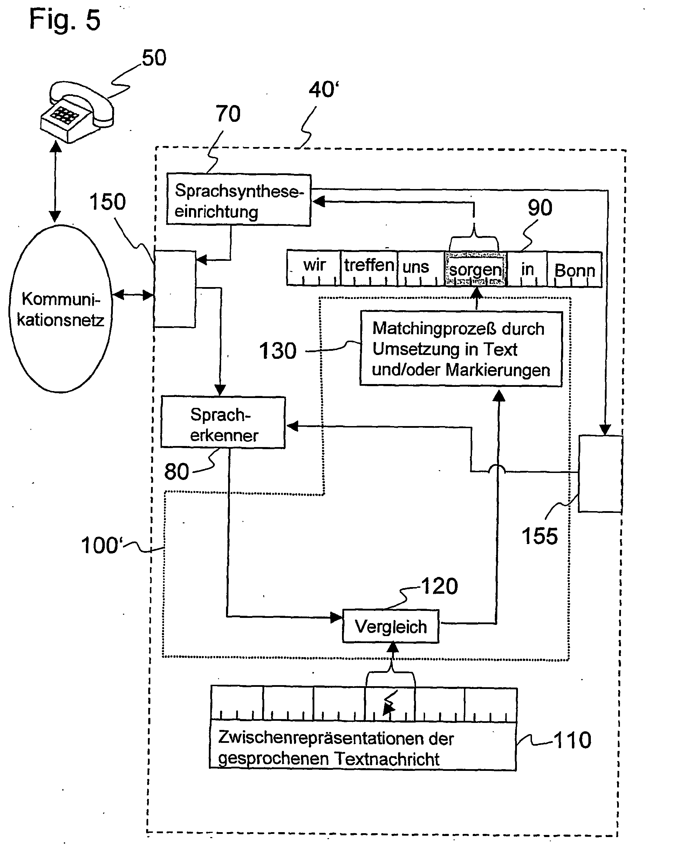

In Fig. 5 ist das in Fig. 4 gezeigte Kommunikationssystem 10 mit einem Nachrichten-Server 40' dargestellt. Lediglich der einfacheren Darstellung wegen sind die Speichereinrichtung 160, die Steuereinrichtung 170, die Vergleichseinrichtung 190 sowie die Verbindungen entsprechend der Fig. 1 nicht eingezeichnet worden. Im Unterschied zum Nachrichten-Server 40 enthält der alternative Nachrichten-Server 40' eine Sucheinrichtung 100', die eine Vergleichseinrichtung 120 und eine Anpassungseinrichtung 130 zur Durchführung eines an sich bekannten Matchinprozesses aufweist. Die Vergleichseinrichtung 120 ist eingangsseitig mit einer Spracherkennungseinrichtung 80 und einem Speicher 110 verbunden, in dem Zwischenrepräsentationen, wie zum Beispiel eine Folge von Merkmalen, die einer zu versendenden Text-Nachricht, die im Speicher 90 abgelegt ist, entspricht. Die Anpassungseinrichtung 130 ist ausgangsseitig mit einem Speicher 90 verbunden, in dem die zu versendende Text-Nachricht als binäre Zeichenfolge abgelegt werden kann.

Nachfolgend wird die Funktionsweise des in Fig. 3 dargestellten Kommunikationssystems 10 näher erläutert. In Analogie zum Ausführungsbeispiel nach Fig. 2 sei angenommen, dass der Benutzer des Telefons 50 den Dienst zur Übertragung einer Text-Nachricht angefordert hat. Daraufhin wird eine Verbindung zwischen dem Telefon 50 und dem Nachrichten-Server 40' über das Kommunikationsnetz 20, nachfolgend auch öffentliches Fernsprechnetz genannt, hergestellt. Der Benutzer des Telefons 50 muss nicht, kann aber vom Nachrichten-Server 40' aufgefordert werden, eine zu versendende Text-Nachricht zu diktieren. Wiederum sei angenommen, dass der Benutzer am Telefon 50 den Satz "wir treffen uns morgen in Bonn" diktiert. Die entsprechenden Sprachsignale werden über das Kommunikationsnetz 20 zum Nachrichten-Server 40' übertragen und der Spracherkennungseinrichtung 80 zugeführt. Die Spracherkennungseinrichtung 80 ist derart ausgebildet, dass sie aus dem diktierten Satz eine Zeichenfolge, beispielsweise gemäß dem ASCII-Standardcode, gewinnt und im Speicher 90 ablegt. Darüber hinaus extrahiert die Spracherkennungseinrichtung 80 aus der diktierten Text-Nachricht eine sogenannte Zwischenrepräsentation der gesprochenen Text-Nachricht, die eine Folge von Merkmalen darstellen können, die im Speicher 110 abgelegt werden. Hierzu kann die Spracherkennungseinrichtung 80 an sich bekannte Merkmals- oder Phonemerkenner aufweisen. Zunächst wird entsprechend den Ausführungen hinsichtlich der in Fig. 1 dargestellten Vorrichtung in der Vergleichseinrichtung 190 ermittelt, ob die an der Telefonieschnittstelle 150 empfangene Sprachäußerung "Wir treffen uns morgen in Bon" mit hoher Wahrscheinlichkeit richtig erkannt worden ist. Hierzu werden die Ausgangssignale der Telefonieschnittstelle und der Sprachsyntheseeinrichtung 70 der Vergleichseinrichtung zugeführt. Die Auswerteeinrichtung der Vergleichseinrichtung 190 ermittelt dann beispielsweise die Fehlerrate. Nur wenn die ermittelte Fehlerrate außerhalb oder innerhalb eines definierten Bereichs liegt, fordert Nachrichten-Server 40' den Benutzer des Telefons 50 auf, die Richtigkeit der diktierten Text-Nachricht zu bestätigen, oder ein fehlerhaftes Wort oder fehlerhafte Wortgruppen erneut zu diktieren. Wiederum sei angenommen, dass die Spracherkennungseinrichtung 80 anstelle des Wortes "morgen" das fehlerhafte Wort "sorgen" erkannt und sowohl im Speicher 90 als auch im Speicher 110 abgelegt hat. Der Benutzer gibt wiederum das zu korrigierende Wort "sorgen" am Telefon 50 ein, welches über das Kommunikationsnetz 20 zur Spracherkennungseinrichtung 80 des Nachrichten-Servers 40' Übermittelt wird. Die Spracherkennungseinrichtung 80 ist derart ausgebildet, dass sie das empfangene Wort "sorgen" in eine geeignete Zwischenrepräsentation aus Merkmalen umsetzt und diese mit der Folge von Merkmalen, die im Speicher 110 abgelegt sind, in der Vergleichseinrichtung 120 vergleicht.

Angenommen sei diesmal, dass die Vergleichseinrichtung 120 die Merkmale ausgewählt hat, die dem Wort "sorgen" entsprechen. Die gefundenen Merkmale werden als Zwischenrepräsentation des gesuchten Wortes "sorgen" der Anpassungseinrichtung 130 zugeführt. Die Anpassungseinrichtung setzt die eingangsseitig angelegten Merkmale in eine Zeichenfolge um, die mit dem Zeichencode codiert worden ist, mit dem auch die im Speicher 90 hinterlegte Zeichenfolge codiert worden ist. Alternativ kann die Anpassungseinrichtung 130 die angelegten Merkmale in eine Markierung umsetzen, die auf die Stelle im Speicher 90 weist, an der das Wort "sorgen" gespeichert ist. Dieses Verfahren ist auch als Matchingprozess bekannt. Anschließend wird die dem Wort "sorgen" entsprechende binäre Zeichenfolge der Sprachsyntheseeinrichtung 70 zugeführt, die aus der Zeichenfolge das Wort "sorgen" dem Benutzer des Telefons 50 über das Kommunikationsnetz 20 vorliest. Ähnlich dem Ausführungsbeispiel nach Fig. 2 wird der Benutzer wiederum vom Nachrichten-Server 40' aufgefordert, die Richtigkeit des vorgelesenen Wortes "sorgen" zu bestätigen, oder noch einmal das zu korrigierende Wort erneut zu diktieren. Da der Benutzer des Telefons 50 die Richtigkeit des erkannten Wortes bestätigt, kann optional der Benutzer vom Nachrichten-Server 40' aufgefordert werden, nunmehr das korrekte Wort als Sprachäußerung einzugeben. Die empfangene Sprachäußerung "morgen" durchläuft die Spracherkennungseinrichtung 80 und wird anschließend über die Sprachsyntheseeinrichtung 70 dem Benutzer am Telefon 50 vorgelesen. Wurde anstelle des Wortes "morgen" ein anderes Wort erkannt, wird der Benutzer noch einmal aufgefordert, das richtige Wort einzugeben. Dieses Verfahren wird solange wiederholt, bis der Benutzer bestätigt, dass das Wort "morgen" korrekt erkannt worden ist. Sobald der Benutzer die Richtigkeit des korrekten Wortes "morgen" bestätigt hat, wird das fehlerhafte Wort "sorgen" im Speicher 90 durch das korrekte Wort "morgen" ersetzt. Die mit hoher Wahrscheinlichkeit korrekte Text-Nachricht kann jetzt versendet werden.

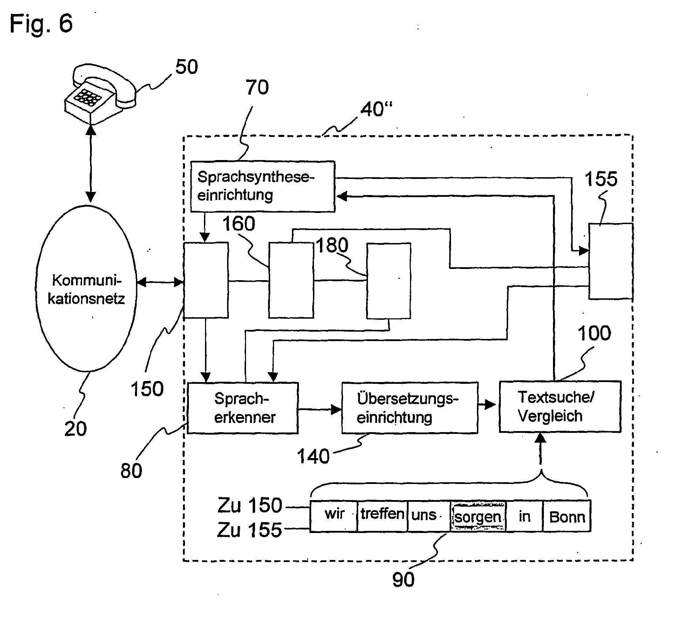

In Fig. 6 ist das in Fig. 4 gezeigte Kommunikationssystem 10 mit einem Nachrichten-Server 40" dargestellt. Lediglich der einfacheren Darstellung wegen sind die Speichereinrichtung 160, die Steuereinrichtung 170, die Vergleichseinrichtung 190 sowie die entsprechenden Verbindungen zwischen der Sprachsyntheseeinrichtung 70, dem Spracherkenner 80, der Vergleichseinrichtung 190 und der Steuereinrichtung 170 nicht eingezeichnet worden.

Fig. 4 zeigt abschnittsweise das in Fig. 1 dargestellte Kommunikationssystem 10 mit einem alternativen Nachrichten-Server 40" . Der Nachrichten-Server 40" ähnelt dem Nachrichten-Server 40 nach Fig. 3. Im Unterschied zum Nachrichten-Server 40 weist der Nachrichten-Server 40" eine Übersetzungseinrichtung 140 zwischen der Spracherkennungseinrichtung 80 und der Sucheinrichtung 100 sowie einen weiteren Speicher 180 auf, in dem benutzerspezifische Merkmale abgelegt werden können. Die benutzerspezifischen Merkmale können über die im Speicher 160 abgelegten Anschlusskennungen im Speicher 180 adressiert und dann im Bedarfsfall an die Spracherkennungseinrichtung 80 weitergeleitet werden. Der Speicher 180 ist mit dem Speicher 160 und der Spracherkennungseinrichtung 80 verbunden. Lediglich der einfacheren Darstellung wegen ist die Steuereinrichtung 170 nicht dargestellt. An dieser Stelle sei darauf hingewiesen, dass anstelle der Sucheinrichtung 100 auch die in Fig. 3 eingesetzte Sucheinrichtung 100' zusammen mit dem Speicher 110 im Nachrichten-Server 40" verwendet werden kann. In dem Speicher 160 sind im vorliegenden Beispiel sowohl die Zielrufnummer des Handys 60 als auch die Anschlusskennung (CLI) des Telefons 50 abgelegt.

Nachfolgend wird die Funktionsweise des in Fig. 4 dargestellten Kommunikationssystem 10 näher erläutert.

Nach Anforderung eines Dienstes zur Übertragung von Text-Nachrichten wird das Telefon 50 über das öffentliche Fernsprechnetz 20 mit dem Nachrichten-Server 40" verbunden und der Benutzer spricht die Text-Nachricht "wir treffen uns morgen in Bonn" in das Telefon 50. Das dazugehörende Sprachsignal wird der Spracherkennungseinrichtung 80 zugeführt, die daraus eine Zeichenfolge erzeugt und diese im Speicher 90 als fehlerbehaftete, zu versendende Text-Nachricht "wir treffen uns sorgen in Bonn" speichert. Die Zeichenfolge wird der Sprachsyntheseeinrichtung 70 zugeführt und als entsprechendes Sprachsignal über das Kommunikationsnetz 20 zum Telefon 50 übertragen und dem Benutzer vorgelesen. Zunächst wird wiederum entsprechend den Ausführungen hinsichtlich der in Fig. 1 dargestellten Vorrichtung in der Vergleichseinrichtung 190 ermittelt, ob die an der Telefonieschnittstelle 150 empfangene Sprachäußerung "Wir treffen uns morgen in Bonn" mit hoher Wahrscheinlichkeit mit hoher Wahrscheinlichkeit richtig erkannt worden ist. Hierzu werden die Ausgangssignale der Telefonieschnittstelle und der Sprachsyntheseeinrichtung 70 der Vergleichseinrichtung zugeführt. Die Auswerteeinrichtung der Vergleichseinrichtung 190 ermittelt dann zum Beispiel die Fehlerrate. Nur wenn die ermittelte Fehlerrate außerhalb oder innerhalb eines definierten Bereichs liegt, wird der Benutzer vom Nachrichten-Server 40" aufgefordert, die Richtigkeit der vorgelesenen Text-Nachricht zu bestätigen, oder ein fehlerhaftes Wort innerhalb der zu versendenden Text-Nachricht zu wiederholen.

Um die Qualität der Sucheinrichtung 100 verbessern zu können, diktiert der Benutzer das zu korrigierende Wort "sorgen" in einer von der Übersetzungseinrichtung 140 verständlichen Fremdsprache. Die Spracherkennungseinrichtung 80 setzt das in der Fremdsprache empfangene Wort in eine Zeichenfolge um, die dann automatisch in der Übersetzungseinrichtung 140 in die Sprache der zu versendenden Text-Nachricht, das ist im vorliegenden Beispiel die deutsche Sprache, übersetzt wird. Hierbei kann als Ergebnis eine Auswahlliste möglicher Wörter entstehen. In diesem Fall können die Wörter gemäß ihrer Wahrscheinlichkeit aufgeführt und der Reihe nach in der Sucheinrichtung 100 als Suchmuster mit der gesamten im Speicher 90 abgelegten Text-Nachricht verglichen werden. Als Ergebnis wird das Wort ausgewählt, das mit der größten Wahrscheinlichkeit das gewünschte zu korrigierende Wort ist.

Angenommen sei, dass die Sucheinrichtung 100 das Wort "uns" in der zu versendenden Text-Nachricht als das zu korrigierende Wort gefunden hat. Das Ausgangssignal der Sucheinrichtung 100 wird an die Sprachsyntheseeinrichtung 70 angelegt, die daraufhin das Wort "uns" dem Benutzer des Telefons 50 vorliest. Der Benutzer des Telefons 50 diktiert daraufhin erneut das Wort "sorgen" in der gewählten Fremdsprache, welches zunächst der Spracherkennungseinrichtung 80, der Übersetzungseinrichtung 140 und danach der Sucheinrichtung 100 zugeführt wird. Wiederum wird das von der Übersetzungseinrichtung 140 kommende Wort oder eine Liste von Wörtern nacheinander mit dem gesamten im Speicher 90 abgelegten Text in der Sucheinrichtung 100 verglichen. Danach wird ein bestimmtes Wort nach vorbestimmten Kriterien, zum Beispiel größte Übereinstimmung mit einem Wort innerhalb der zu versendenden Text-Nachricht, ausgewählt. Das gefundene Wort wird über die Sprachsyntheseeinrichtung 70 dem Benutzer des Telefons 50 vorgelesen. Diese Prozedur wird solange wiederholt, bis der Benutzer bestätigt, dass das zu korrigierende Wort "sorgen" gefunden worden ist. Anschließend diktiert der Benutzer am Telefon 50 das korrekte Wort "Morgen" in der Ursprungssprache oder alternativ in einer Fremdsprache, die vom Übersetzungssystem 140 verstanden werden kann. Sobald der Benutzer bestätigt, dass das korrekte Wort "morgen" erkannt worden ist, sorgt der Nachrichten-Server 40" dafür, dass das das fehlerhafte Wort "sorgen" durch das korrekte Wort "morgen" im Speicher 90 überschrieben wird.

Um die Qualität der Spracherkennung zu verbessern, sorgt die Steuereinrichtung (nicht dargestellt) dafür, dass die im Speicher 160 abgelegte Anschlusskennung des Telefons 50 an den Speicher 180 angelegt wird und die dort abgelegten benutzerspezifischen Merkmale der Spracherkennungseinrichtung 80 zugeführt werden. Auf diese Weise kann eine sprecherspezifische Verhaltensweise berücksichtigt werden.

An dieser Stelle sei erwähnt, dass die in den Figuren 4, 5 und 6 dargestellten Nachrichten-Server 40, 40' bzw. 40" so ausgebildet sein können, dass dem Benutzer des Telefons 50 nicht nur das zu korrigierende Wort, sondern die Text-Nachricht bis zu dem zu korrigierenden Wort vorgelesen wird. Diese Fähigkeit des Nachrichten-Servers ist vor allem dann erforderlich, wenn in der zu versendenden Text-Nachricht ähnliche Wörter oder ein Wort mehrmals vorkommt. Auf diese Weise kann die Dauer des Suchprozesses verkürzt werden.

Eine alternative Ausführungsform des Kommunikationssystems 10 sieht vor, dass der Benutzer das korrekte Wort buchstabiert und gegebenenfalls zusätzlich als Wort diktiert, um die Erkennungswahrscheinlichkeit der Spracherkennungseinrichtung 80 zu erhöhen.

Es sei darauf hingewiesen, dass die in den Fig. 4, 5 und 6 gezeigten Nachrichten-Server nicht getrennt zu betrachten sind, sondern dass die darin enthaltenen Komponenten beliebig untereinander ausgetauscht werden können.

An dieser Stelle sei noch erwähnt, dass es sich bei den Endeinrichtungen 50 und 60 beispielsweise auch um Geräte handeln kann, die unter anderem auch eine Extraktion von Merkmalen aus Sprachäußerungen vornehmen können. Diese Merkmale werden dann anstelle der Sprachäußerung über das Netzwerk der Spracherkennungseinrichtung 80 zugeführt.

## Patentansprüche

1. Vorrichtung zum Erkennen fehlerbehafteter Text-Nachrichten, insbesondere SMS-Nachrichten, die aus Sprachäußerungen erzeugt werden, mit einer Spracherkennungseinrichtung (80) zum Erzeugen einer Text-Nachricht aus wenigstens einer ursprünglichen Sprachäußerung, einer der Spracherkennungseinrichung (80) zugeordneten Sprachsyntheseeinrichtung (70) zum Umsetzen der aus der wenigstens einen ursprünglichen Sprachäußerung erzeugten Text-Nachricht in eine Sprachäußerung, einer mit der Sprachsyntheseeinrichtung (70) verbundenen Vergleichseinrichtung (190), die die wenigstens eine ursprüngliche Sprachäußerung mit der von der Sprachsyntheseeinrichtung (70) erzeugten Sprachäußerung vergleicht und einer der vergleichseinrichtung (190) Zugeordneten Auswerteinrichlung Zum Ermitteln von parametern, die die Fehlerhäufigkeit oder übereinstimmungshäufigkeit in einer in der Spracherkennungseinrichlung (80) erzeugten Text-Nachricht repräsentieren, **gekennzeichnet durch** eine Einrichtung zur Sprachdialogführung (70, 170) mit einem Benutzer, welche die Sprachsyntheseeinrichtung (70) und eine Steuereinrichtung (170) enthalten kann, wobei die Einrichtung zur Sprachdialogführung (70, 170) die sprachliche Ausgabe einer Text-Nachricht an den Benutzer in Abhängigkeit vom Ergebnis der Auswerteeinrichtung veranlasst , wenn eine Fehlerhäufigkeit des Vergleichs der wenigstens einen ursprünglichen Sprachäußerung mit der von der Sprachsyntheseeinrichtung (70) erzeugten Sprachäußerung einen vorgebbaren Bereich überschreitet.

2. Vorrichtung nach Anspruch 1,**gekennzeichnet durch** eine erste Einrichtung zum Extrahieren von Merkmalen aus der wenigstens einen ursprünglichen Sprachäußerung, eine zweite, der Sprachsyntheseeinrichtung (70) zugeordneten Einrichtung (200) zum Extrahieren von Merkmalen aus der umgesetzten Sprachäußerung, wobei die Vergleichseinrichtung (190) mit der ersten und zweiten Extraktionseinrichtung (200) verbunden ist und die aus der wenigstens einen ursprünglichen Sprachäußerung extrahierten Merkmale mit den aus der umgesetzten Sprachäußerung extrahierten Merkmalen vergleicht.

3. Vorrichtung nach einem der Ansprüche 1 bis 2, **gekennzeichnet durch** eine Speichereinrichtung (220) zum Speichern einer ursprünglichen Sprachäußerung, einer umgesetzten Sprachäußerung, von aus einer Sprachäußerung extrahierten Merkmalen, dem Ergebnis der Vergleichseinrichtung (190) und/oder dem Ergebnis der Auswerteeinrichtung.

4. Vorrichtung nach einem der Ansprüche 1 bis 3
**dadurch gekennzeichnet, dass**
die Einrichtung zur Sprachdialogführung (70, 170) den Benutzer auffordert, einen oder mehrere fehlerhafte oder als fehlerhaft bewertete Abschnitte innerhalb der Text-Nachricht einzugeben.

5. Kommunikationsendeinrichtung zum Versenden von Text-Nachrichten, insbesondere SMS-Nachrichten, über wenigstens ein Netzwerk (20, 30), mit einer Vorrichtung zum Erkennen fehlerbehafteter Text-Nachrichten, die aus Sprachäußerungen gewonnen werden, gemäß Anspruch 1 oder 2,
einer Eingabeeinrichtung zur Eingabe von Sprachäußerungen,
einer Einrichtung zum Erkennen und Auswerten von Rufnummern (150), und
einer Einrichtung zum Versenden einer Text-Nachricht an wenigstens eine Zieleinrichtung (60), wobei eine Sucheinrichtung (100, 100') vorgesehen ist, die unter Ansprechen auf eine oder mehrere eingegebene bestimmte Sprachäußerungen den dazugehörenden Abschnitt innerhalb der zu versendenden Text-Nachricht sucht.

6. Kommunikationsendeinrichtung nach Anspruch 5,
**gekennzeichnet durch**
eine Einrichtung zur Sprachdialogführung (70, 170) mit einem Benutzer, wobei die Einrichtung zur Sprachdialogführung eine Steuereinrichtung (170) und die Sprachsyntheseeinrichtung (70) enthalten kann.

7. Kommunikationsendeinrichtung nach Anspruch 6
**dadurch gekennzeichnet, dass**
die Einrichtung zur Sprachdialogführung (70, 170) die sprachliche Ausgabe einer Text-Nachricht an den Benutzer in Abhängigkeit vom Ergebnis der Auswerteeinrichtung veranlasst.

8. Kommunikationsendeinrichtung nach Anspruch 7
**dadurch gekennzeichnet, dass**
die Einrichtung zur Sprachdialogführung (70, 170) den Benutzer auffordert, einen oder mehrere fehlerhafte oder als fehlerhaft bewertete Abschnitte innerhalb der Text-Nachricht einzugeben.

9. Kommunikationsendeinrichtung nach einem der Ansprüche 5 bis
**dadurch gekennzeichnet, dass**
der Sucheinrichtung (100, 100') eine Übersetzungseinrichtung (140) zum Übersetzen einer fremdsprachlichen Sprachäußerung in die Sprache der zu versendenden Text-Nachricht zugeordnet ist.

10. Kommunikationsendeinrichtung nach einem der Ansprüche 5 bis 9, **dadurch gekennzeichnet, dass**
die Sucheinrichtung (100) eine Vergleichseinrichtung zum Vergleichen eines von der Spracherkennungseinrichtung (80) gelieferten Ausgangssignals mit der zu versendenden Text-Nachricht und eine Auswahleinrichtung zum Auswählen eines Abschnitts innerhalb der zu versendenden Text-Nachricht, aufweist, wobei der ausgewählte Abschnitt mit einer bestimmten Wahrscheinlichkeit dem Ausgangssignal der Spracherkennungseinrichtung (80) entspricht.

11. Kommunikationsendeinrichtung nach einem der Ansprüche 5 bis 11
**dadurch gekennzeichnet, dass**
die Sucheinrichtung (100') aufweist :
eine Vergleichseinrichtung (120) zum Vergleichen eines von der Spracherkennungseinrichtung (80) gelieferten Ausgangssignals mit der Folge von Merkmalen, die eine zu versendende Text-Nachricht darstellen,
eine Auswahleinrichtung zum Auswählen von Merkmalen aus der Folge von Merkmalen, wobei die ausgewählten Merkmale mit einer vorbestimmten Wahrscheinlichkeit dem Ausgangssignal der Spracherkennungseinrichtung (80) entsprechen, und
eine Anpassungseinrichtung (130) zum Umsetzen der ausgewählten Merkmalen in den dazugehörenden Abschnitt innerhalb der zu versendenden Text-Nachricht oder zum Erzeugen einer Markierung aus den ausgewählten Merkmalen, die auf den dazugehörenden Abschnitt innerhalb der zu versendenden Text-Nachricht zeigt.

12. Kommunikationsendeinrichtung nach einem der Ansprüche 5 bis 11, **gekennzeichnet durch** eine Einrichtung, die den von der Sucheinrichtung (100, 100') aufgefundenen Abschnitt innerhalb einer zu versendenden Text-Nachricht löschen, ersetzen oder die vor und/oder hinter dem gefundenen Abschnitt einen neuen Textabschnitt einfügen kann.

13. Kommunikationssystem zum Versenden von Text-Nachrichten, insbesondere SMS-Nachrichten, mit wenigstens einem Netzwerk (20, 30),
mehreren an das Netzwerk anschaltbaren Endeinrichtungen mit einer Eingabeeinrichtung zur Eingabe von Sprachäußerungen, und
wenigstens einem dem Netzwerk zugeordneten Nachrichten-Server (40, 40', 40"), der
eine Vorrichtung zum Erkennen fehlerbehafteter Text-Nachrichten, die aus Sprachäußerungen gewonnen werden, gemäß Anspruch 1 oder 2,
eine Einrichtung zum Erkennen und Auswerten von Rufnummern (150, 155), und
eine Einrichtung zum Versenden einer Text-Nachricht an wenigstens eine Zieleinrichtung (60) aufweist, wobei der Nachrichten-Server (40, 40', 40") einen Speicher (90) zum Ablegen zu versendender Text-Nachrichten und eine Sucheinrichtung (100, 100') aufweist, die unter Ansprechen auf eine oder mehrere an einer Endeinrichtung (50) eingegebene vorbestimmte Sprachäußerungen den dazugehörenden Abschnitt innerhalb der zu versendenden Text-Nachricht sucht.

14. Kommunikationssystem nach Anspruch 13
**gekennzeichnet durch** eine Einrichtung (70, 170) zur Sprachdialogführung mit einer Endeinrichtung (50, 60), wobei die Sprachdialogführungs-Einrichtung die Sprachsyntheseeinrichtung (70) und eine Steuereinrichtung (170) enthalten kann.

15. Kommunikationssystem nach Anspruch 14,
**dadurch gekennzeichnet, dass**
die Sprachdialogführungs-Einrichtung (70, 170) in Abhängigkeit vom Ergebnis der Auswerteeinrichtung zur sprachlichen Ausgabe einer zu versendenden Text-Nachricht an die Endeinrichtung (50), an der die der zu versendenden Text-Nachricht entsprechenden Sprachäußerung eingegeben worden ist, ausgebildet ist.

16. Kommunikationssystem nach Anspruch 15,
**dadurch gekennzeichnet, dass**
die Sprachdialogführungs-Einrichtung in Abhängigkeit vom Ergebnis der Auswerteeinrichtung zur Aufforderung des Benutzers der Endeinrichtung (50), einen oder mehrere fehlerhafte oder als fehlerhaft bewertete Abschnitte innerhalb der zu versendenden Text-Nachricht einzugeben, ausgebildet ist.

17. Kommunikationssystem nach einem der Ansprüche 13 bis
16, **dadurch gekennzeichnet, dass**
die Sucheinrichtung (100) eine Vergleichseinrichtung zum Vergleichen eines von der Spracherkennungseinrichtung (80) gelieferten Ausgangssignals mit der zu versendenden Text-Nachricht und eine Auswahleinrichtung zum Auswählen eines Abschnitts innerhalb der zu versendenden Text-Nachricht, aufweist, wobei der ausgewählte Abschnitt mit einer bestimmten Wahrscheinlichkeit dem Ausgangssignal der Spracherkennungseinrichtung (80) entspricht.

18. Kommunikationssystem nach einem der Ansprüche 13 bis
16, **dadurch gekennzeichnet, dass**
die Sucheinrichtung (100')aufweist:
eine Vergleichseinrichtung (120) zum Vergleichen eines von der Spracherkennungseinrichtung (80) gelieferten Ausgangssignals mit der Folge von Merkmalen, die eine zu versendende Text-Nachricht darstellen,
eine Auswahleinrichtung zum Auswählen von Merkmalen aus der Folge von Merkmalen, wobei die ausgewählten Merkmale mit einer vorbestimmten Wahrscheinlichkeit dem Ausgangssignal der Spracherkennungseinrichtung (80) entsprechen, und
eine Anpassungseinrichtung (130) zum Umsetzen der ausgewählten Merkmalen in den dazugehörenden Abschnitt innerhalb der zu versendenden Text-Nachricht oder zum Erzeugen einer Markierung aus den ausgewählten Merkmalen, die auf den dazugehörenden Abschnitt innerhalb der zu versendenden Text-Nachricht zeigt.

19. Kommunikationssystem nach einem der Ansprüche 13 bis
18, **dadurch gekennzeichnet, dass**
der Nachrichten-Server (40, 40', 40") eine Einrichtung aufweist, die den von der Sucheinrichtung (100, 100') aufgefundenen Abschnitt innerhalb einer zu versendenden Text-Nachricht löschen, ersetzen oder die vor und/oder hinter dem gefundenen Abschnitt einen neuen Textabschnitt einfügen kann.

20. Kommunikationssystem nach einem der Ansprüche 20 bis
19 **dadurch gekennzeichnet, dass**
der Nachrichten-Server (40, 40', 40") eine Einrichtung (150, 155) zum Erkennen und Auswerten von Kennungen (Anschlusskennung CLI, HLR, IP-Adresse), die den Endeinrichtungen zugeordnet sind, und eine Speichereinrichtung (180) aufweist, in der benutzerspezifische Merkmale unter der Kennung der jeweiligen Endeinrichtung abgelegt sind, wobei die Spracherkennungseinrichtung (80) zum Zugreifen auf benutzerspezifische Merkmale ausgebildet ist.

## Claims

1. An Apparatus for detecting text messages containing errors, in particular SMS messages, that are generated from speech utterances, comprising:
a speech recognition device (80) for generating a text message from at least one original speech utterance,
a speech synthesis device (70) associated with said speech recognition device (80) for converting the text message generated from the at least one original speech utterance into a speech utterance,
a comparison device (190) connected to the speech synthesis device (70) that compares the at least one original speech utterance with the speech utterance generated by the speech synthesis device (70), and
an analysis device associated with the comparison device (180) for determining parameters that represent the error rate or match rate in a text message generated in the speech recognition device (80), **characterized by** adevice for conducting speech dialog (70, 170) with a user, which device may contain the speech synthesis device (70) and a controller (170), wherein the device for conducting speech dialog (70, 170) initiates the speech output of a text message to the user as a function of the result from the analysis device when an error rate of the comparison of the at least one original speech utterance with the speech utterance generated by the speech synthesis device (70) exceeds a predefinable range.

2. An apparatus according to claim 1, **characterized by** a first device for extracting features from the at least one original speech utterance, a second device (200), associated with the speech synthesis device (70), for extracting features from the converted speech utterance, wherein the comparison device (190) is connected to the first and second extraction device (200) and compares the features extracted from the least one original speech utterance with the features extracted from the converted speech utterance.

3. An apparatus according to any one of claims 1 through 2, **characterized by** a memory device (220) for storing an original speech utterance, a converted speech utterance, features extracted from a speech utterance, the results from the comparison device (190), and/or the results from the analysis device.

4. An apparatus according to any one of claims 1 through 3, **characterized in that** the device for conducting speech dialog (70, 170) prompts the user to enter one or more segments within the text message that are erroneous or are evaluated as erroneous.

5. A communications terminal device for sending text messages, in particular SMS messages, over at least one network (20, 30), having an apparatus according to claims 1 or 2 for detecting text messages containing errors that are generated from speech utterances,
an input device for entry of speech utterances, a device for recognizing and analyzing call numbers (150), and
a device for sending a text message to at least one destination device (60), wherein a search device (100, 100') is provided that, in response to one or more specific speech utterances that have been entered, searches for the associated segment within the text message to be transmitted.

6. A communications terminal device according to claim 5, **characterized by** a device for conducting speech dialog (70, 170) with a user, wherein the device for conducting speech dialog may contain a controller (170) and the speech synthesis device (70).

7. A communications terminal device according to claim 6, **characterized in that** the device for conducting speech dialog (70, 170) initiates the speech output of a text message to the user as a function of the result from the analysis device.

8. A communications terminal device according to claim 7, **characterized in that** the device for conducting speech dialog (70, 170) prompts the user to enter one or more segments within the text message that are erroneous or are evaluated as erroneous.

9. A communications terminal device according to any one of claims 5 through 8, **characterized in that** a translation device (140) for translating a speech utterance in a foreign language into the language of the text message to be sent is associated with the search device (100, 100').

10. A communications terminal device according to any one of claims 5 through 9, **characterized in that** the search device (100) has a comparison device for comparing an output signal provided by the speech recognition device (80) with the text message to be sent, and a selection device for selecting a segment within the text message to be sent, wherein the selected segment corresponds to the output signal of the speech recognition device (80) with a specific probability.

11. A communications terminal device according to any one of claims 5 through 9, **characterized in that** the search device (100') comprises:
a comparison device (120) for comparing an output signal provided by the speech recognition device (80) with the sequence of features that represent a text message to be sent,
a selection device for selecting features from the sequence of features, wherein the selected features correspond to the output signal of the speech recognition device (80) with a predefined probability, and
a matching device (130) for converting the selected features into the associated segment within the text message to be sent or for generating a marker from the selected features that points to the associated segment within the text message to be sent.

12. A communications terminal device according to any one of claims 5 through 11, **characterized by** a device that can delete the segment found by the search device (100, 100') within a text message to be sent, can replace said segment, or can insert a new text segment before and/or after the found segment.

13. A communications system for sending text messages, in particular SMS messages, having at least one network (20, 30), comprising
multiple terminal devices that can be connected to the network and have an input device for entry of speech utterances, and
at least one message server (40, 40', 40") that is associated with the network and that has an apparatus according to claim 1 or 2 for detecting text messages containing errors and generated from speech utterances,
a device for recognizing and analyzing call numbers (150, 155), and
a device for sending a text message to at least one destination device (60), wherein the message server (40, 40', 40") has a memory (90) for storing text messages to be transmitted and has a search device (100, 100') that, in response to one or more predefined speech utterances entered at a terminal device (50), searches for the associated segment within the text message to be transmitted.

14. A communications system according to claim 13, **characterized by** a device for conducting speech dialog (70, 170) with a terminal device (50, 60), wherein the device for conducting speech dialog may contain the speech synthesis device (70) and a controller (170).

15. A communications system according to claim 14, **characterized in that** the device for conducting speech dialog (70, 170) is designed to output as speech, in dependence on the result from the analysis apparatus, a text message to be transmitted at the terminal device (50) at which the speech utterance corresponding to the text message to be transmitted was entered.

16. A communications system according to claim 15, **characterized in that** the device for conducting speech dialog is designed to prompt the user of the terminal device (50), in dependence on the result from the analysis device, to enter one or more segments within the text message to be sent that are erroneous or are evaluated as erroneous.

17. A communications system according to any one of claims 13 through 16, **characterized in that** the search device (100) has a comparison device for comparing an output signal provided by the speech recognition device (80) with the text message to be sent, and has a selection device for selecting a segment within the text message to be sent, wherein the selected segment corresponds to the output signal of the speech recognition apparatus (80) with a specific probability.

18. A communications system according to any one of claims 13 through 16, **characterized in that** the search device (100') comprises:
a comparison device (120) for comparing an output signal provided by the speech recognition device (80) with the sequence of features that represent a text message to be sent,
a selection device for selecting features from the sequence of features, wherein the selected features correspond to the output signal of the speech recognition device (80) with a predefined probability, and
a matching device (130) for converting the selected features into the associated segment within the text message to be sent or for generating a marker from the selected features that points to the associated segment within the text message to be sent.

19. A communications system according to any one of claims 13 through 18, **characterized in that** the message server (40, 40', 40") has a device that can delete the segment found by the search device (100, 100') within a text message to be sent, can replace said segment, or can insert a new text segment before and/or after the found segment.

20. A communications system according to any one of claims 13 through 19, **characterized in that** the message server (40, 40', 40") has a device (150, 155) for detecting and analyzing identifiers (call line identifier CLI, HLR, IP address) associated with the terminal devices, and has a memory device (180) in which user-specific features are stored under the identifier of the applicable terminal device, wherein the speech recognition device (80) is designed to access user-specific features.

## Revendications

1. Dispositif de reconnaissance de messages de texte erronés, notamment de messages SMS, générés à partir d'énoncés vocaux, comprenant
un dispositif de reconnaissance vocale (80) destiné à générer un message de texte à partir d'au moins un énoncé vocal initial,
un dispositif de synthèse vocale (70) associé au dispositif de reconnaissance vocale (80) pour la transformation du message de texte généré à partir du au moins un énoncé vocal initial en un énoncé vocal,
un dispositif de comparaison (190) qui est relié au dispositif de synthèse vocale (70) et qui compare le au moins un énoncé vocal initial avec l'énoncé vocal généré par le dispositif de synthèse vocale (70), et
un dispositif d'analyse associé au dispositif de comparaison (180) pour la détermination de paramètres représentant la fréquence d'erreur ou la fréquence de correspondance dans un message de texte généré par le dispositif de reconnaissance vocale (80),
**caractérisé par** un dispositif de dialogue vocal (70, 170) avec un utilisateur, apte à contenir le dispositif de synthèse vocale (70) et un dispositif de commande (170), le dispositif de dialogue vocal (70, 170) déclenchant la restitution vocale d'un message de texte à l'utilisateur en fonction du résultat du dispositif d'analyse si une fréquence d'erreur de la comparaison du au moins un énoncé vocal initial avec l'énoncé vocal généré par le dispositif de synthèse vocale (70) dépasse une plage prédéterminable.

2. Dispositif selon la revendication 1, **caractérisé par**
un premier dispositif d'extraction de caractéristiques du au moins un énoncé vocal initial,
un deuxième dispositif (200) d'extraction de caractéristiques de l'énoncé vocal transformé, associé au dispositif de synthèse vocale (70), le dispositif de comparaison (190) étant relié au premier et au deuxième dispositif d'extraction (200) et comparant les caractéristiques extraites du au moins un énoncé vocal initial avec les caractéristiques extraites de l'énoncé vocal transformé.

3. Dispositif selon l'une des revendications 1 à 2, **caractérisé par** un dispositif d'enregistrement (220) d'un énoncé vocal initial, d'un énoncé vocal transformé, de caractéristiques extraites d'un énoncé vocal, du résultat du dispositif de comparaison (190) et/ou du résultat du dispositif d'analyse.

4. Dispositif selon l'une des revendications 1 à 3, **caractérisé en ce que** le dispositif de dialogue vocal (70, 170) invite l'utilisateur à entrer un ou plusieurs passages erronés ou jugés erronés dans le message de texte.

5. Terminal de communication pour envoyer des messages de texte, notamment des messages SMS, par l'intermédiaire d'au moins un réseau (20, 30), comprenant un dispositif de reconnaissance de messages de texte erronés obtenus à partir d'énoncés vocaux, selon la revendication 1 ou 2,
un dispositif d'entrée pour entrer des énoncés vocaux,
un dispositif de reconnaissance et d'analyse de numéros d'appel (150) et
un dispositif d'envoi d'un message de texte à au moins un dispositif de destination (60), un dispositif de recherche (100, 100') étant prévu qui, en réponse à un ou plusieurs énoncés vocaux déterminés entrés, recherche le passage correspondant dans le message de texte à envoyer.

6. Terminal de communication selon la revendication 5, **caractérisé par** un dispositif de dialogue vocal (70, 170) avec un utilisateur, le dispositif de dialogue vocal étant apte à contenir un dispositif de commande (170) et le dispositif de synthèse vocale (70).

7. Terminal de communication selon la revendication 6, **caractérisé en ce que** le dispositif de dialogue vocal (70, 170) déclenche la restitution vocale d'un message de texte à l'utilisateur en fonction du résultat du dispositif d'analyse.

8. Terminal de communication selon la revendication 7, **caractérisé en ce que** le dispositif de dialogue vocal (70, 170) invite l'utilisateur à entrer un ou plusieurs passages erronés ou jugés erronés dans le message de texte.

9. Terminal de communication selon l'une des revendications 5 à 8, **caractérisé en ce qu'**un dispositif de traduction (140) est associé au dispositif de recherche (100, 100') pour la traduction d'un énoncé vocal en langue étrangère dans la langue du message de texte à envoyer.

10. Terminal de communication selon l'une des revendications 5 à 9, **caractérisé en ce que** le dispositif de recherche (100) comporte un dispositif de comparaison pour comparer un signal de sortie fourni par le dispositif de reconnaissance vocale (80) avec le message de texte à envoyer, et un dispositif de sélection d'un passage dans le message de texte à envoyer, le passage de texte sélectionné correspondant, avec une certaine probabilité, au signal de sortie du dispositif de reconnaissance vocale (80).

11. Terminal de communication selon l'une des revendications 5 à 9, **caractérisé en ce que** le dispositif de recherche (100') comprend :
un dispositif de comparaison (120) d'un signal de sortie fourni par le dispositif de reconnaissance vocale (80) avec la suite de caractéristiques représentant un message de texte à envoyer,
un dispositif de sélection de caractéristiques parmi les caractéristiques de la suite, les caractéristiques sélectionnées correspondant, avec une probabilité prédéterminée, au signal de sortie du dispositif de reconnaissance vocale (80) et
un dispositif d'adaptation (130) pour transformer les caractéristiques sélectionnées dans le passage correspondant dans le message de texte à envoyer ou pour générer une marque à partir des caractéristiques sélectionnées qui pointe sur le passage correspondant dans le message de texte à envoyer.

12. Terminal de communication selon l'une des revendications 5 à 11, **caractérisé par** un dispositif apte à supprimer ou à remplacer le passage trouvé par le dispositif de recherche (100, 100') dans un message de texte à envoyer, ou à insérer un nouveau passage de texte avant et/ou après le passage trouvé.

13. Système de communication pour envoyer des messages de texte, notamment des messages SMS, comprenant
au moins un réseau (20, 30),
plusieurs terminaux aptes à être raccordés au réseau et dotés d'un dispositif d'entrée pour entrer des énoncés vocaux, et
au moins un serveur de messages (40, 40', 40") associé au réseau, qui comprend un dispositif de reconnaissance de messages de texte erronés obtenus à partir d'énoncés vocaux, selon la revendication 1 ou 2,
un dispositif de reconnaissance et d'analyse de numéros d'appel (150, 155), et
un dispositif d'envoi d'un message de texte à au moins un dispositif de destination (60), le serveur de messages (40, 40', 40") comprenant une mémoire (90) pour le stockage de messages de texte à envoyer et un dispositif de recherche (100, 100') qui, en réponse à un ou plusieurs énoncés vocaux prédéterminés entrés dans un terminal (50), recherche le passage correspondant dans le message de texte à envoyer.

14. Système de communication selon la revendication 13, **caractérisé par** un dispositif de dialogue vocal (70, 170) pour dialoguer avec un terminal (50, 60), le dispositif de dialogue vocal étant apte à contenir le dispositif de synthèse vocale (70) et un dispositif de commande (170).

15. Système de communication selon la revendication 14, **caractérisé en ce que** le dispositif de dialogue vocal (70, 170) est réalisé en fonction du résultat du dispositif d'analyse pour la restitution vocale d'un message de texte à envoyer au terminal (50) sur lequel a été entré l'énoncé vocal correspondant au message de texte à envoyer.

16. Système de communication selon la revendication 15, **caractérisé en ce que** le dispositif de dialogue vocal est réalisé en fonction du résultat du dispositif d'analyse pour inviter l'utilisateur du terminal (50) à entrer un ou plusieurs passages erronés ou jugés erronés dans le message de texte à envoyer.

17. Système de communication selon l'une des revendications 13 à 16, **caractérisé en ce que** le dispositif de recherche (100) comporte un dispositif de comparaison d'un signal de sortie fourni par le dispositif de reconnaissance vocale (80) avec le message de texte à envoyer et un dispositif de sélection d'un passage dans le message de texte à envoyer, le passage sélectionné correspondant, avec une certaine probabilité, au signal de sortie du dispositif de reconnaissance vocale (80).

18. Système de communication selon l'une des revendications 13 à 16, **caractérisé en ce que** le dispositif de recherche (100') comprend:
un dispositif de comparaison (120) d'un signal de sortie fourni par le dispositif de reconnaissance vocale (80) avec la suite de caractéristiques représentant un message de texte à envoyer,
un dispositif de sélection de caractéristiques parmi les caractéristiques de la suite, les caractéristiques sélectionnées correspondant, avec une probabilité prédéterminée, au signal de sortie du dispositif de reconnaissance vocale (80) et
un dispositif d'adaptation (130) pour transformer les caractéristiques sélectionnées dans le passage correspondant dans le message de texte à envoyer ou pour générer une marque à partir des caractéristiques sélectionnées qui pointe sur le passage correspondant dans le message de texte à envoyer.

19. Système de communication selon l'une des revendications 13 à 18, **caractérisé en ce que** le serveur de messages (40, 40', 40") comporte un dispositif apte à supprimer ou à remplacer le passage trouvé par le dispositif de recherche (100, 100') dans un message de texte à envoyer, ou à insérer un nouveau passage de texte avant et/ou après le passage trouvé.

20. Système de communication selon l'une des revendications 13 à 19, **caractérisé en ce que** le serveur de messages (40, 40', 40") comporte un dispositif (150, 155) de reconnaissance et d'analyse d'identifiants (identifiant de ligne d'appel CLI, HLR, adresse IP) associés aux terminaux, et un dispositif d'enregistrement (180) dans lequel sont stockées les caractéristiques spécifiques à l'utilisateur sous l'identifiant du terminal respectif, le dispositif de reconnaissance vocale (80) étant conçu pour accéder à des caractéristiques spécifiques à l'utilisateur.
